# EUROPEAN PATENT SPECIFICATION

(11) **EP 1 245 613 B1**
(45) Date of publication and mention of the grant of the patent: **08.06.2005**
(21) Application number: 02007211.2
(22) Date of filing: 27.03.2002
(51) Int. Cl.: C08H 5/02, C07G 17/00, C09J 161/00

(54) **A method for the production of tannin and its use**
Verfahren zur Herstellung von Tannin und seine Verwendung
Procédé de fabrication de tanin et son utilisation

(30) Priority: 30.03.2001 JP 2001101823; 13.08.2001 JP 2001245450
(43) Date of publication of application: 02.10.2002
(73) Proprietor: WOOD ONE CO., LTD., Hiroshima-ken (JP); Monash University, Clayton, Vic 3800 (AU)
(72) Inventor: Nakamoto, Yusho, Hatsukaichi-shi, Hiroshima-ken (JP); Tsunoda, Toshihiko, Hatsukaichi-shi, Hiroshima-ken (JP); Ono, Keiko, Hiroshima-shi, Hiroshima-ken (JP); Kageyama, Naoko, Hiroshima-shi, Hiroshima-ken (JP); Yazaki, Yoshikazu, Moorabbin, Victoria 3189 (AU); Jiang, Huijian, Clayton, Victoria 3168 (AU); Lawson, Frank, Mitcham, Victoria 3132 (AU); Uhlherr, Peter Heinz Theodore, Mt. Waverley, Victoria 3149 (AU); Watkins, John Bernald, Rowville, Victoria 3178 (AU)
(74) Representative: HOFFMANN - EITLE

(56) References cited:
- US-A- 5 417 888
- PATENT ABSTRACTS OF JAPAN vol. 1998, no. 10, 31 August 1998 (1998-08-31) & JP 10 120696 A (TOYO HAKKO:KK), 12 May 1998 (1998-05-12)
- PATENT ABSTRACTS OF JAPAN vol. 005, no. 111 (C-063), 18 July 1981 (1981-07-18) & JP 56 051497 A (ITO SABURO;OTHERS: 02), 9 May 1981 (1981-05-09)
- CHEMICAL ABSTRACTS, vol. 108, no. 23, 6 June 1988 (1988-06-06) Columbus, Ohio, US; abstract no. 201182, HAGERMAN, ANN: "Extraction of tannin from fresh and preserved leaves" XP002051845 & J. CHEM. ECOL., vol. 14, no. 2, 1988, pages 453-461,
- DATABASE CA [Online] CHEMICAL ABSTRACTS SERVICE, COLUMBUS, OHIO, US; SOTO, ROY ET AL: "Extraction of polyflavonoids from Pinus radiata D. Don bark: Evaluation of effects of solvent composition and of the height on tree bark" retrieved from STN Database accession no. 135:58522 CA XP002203646 & BOLETIN DE LA SOCIEDAD CHILENA DE QUIMICA (2001), 46(1), 41-49, 2001,
- DATABASE CA [Online] CHEMICAL ABSTRACTS SERVICE, COLUMBUS, OHIO, US; RAO, P. HANUMANTA: "Extraction of tannins by nonaqueous solvents-by methanol from myrabolans and divi-divi" retrieved from STN Database accession no. 49:25981 CA XP002203645 & J. IND. CHEM. SOC., IND. & NEWS ED. (1952), 15, 182, 1952,
- DATABASE CA [Online] CHEMICAL ABSTRACTS SERVICE, COLUMBUS, OHIO, US; SOTO, ROY ET AL: "Solvent effect on extraction of polyflavonoids from Pinus radiata D. Don bark" retrieved from STN Database accession no. 136:356606 CA XP002203647 & BRAZILIAN SYMPOSIUM ON THE CHEMISTRY OF LIGNINS AND OTHER WOOD COMPONENTS PROCEEDINGS, 6TH, GUARATINGUETA, BRAZIL, OCT. 25-28, 1999 (2001), MEETING DATE 1999, 401-406. EDITOR(S): SILVA, FLAVIO TEIXEIRA;FERRAZ, ANDRE; PAIVA, TERESA CRISTINA BRAZIL. PU, 2001,

## Description

### 1. Field of the Invention

The present invention relates to a method for extracting tannin, tannin obtained by the same method, and a use thereof. More specifically, the present invention relates to a method for producing tannin to be contained in an adhesive or a binder for wood as a main component.

### 2. Description of the Related Art

Tannin is widely present in plants. Tannin is conventionally known as a generic name for a substance that is easily dissolved in water, whose aqueous solution is highly astringent, and which has the property of tanning leather. Chemically, tannin is not a simple substance but an aggregation of complex organic compounds.

Tannin is classified in terms of its chemical property into hydrolysable tannin that is hydrolyzed by heating with a dilute acid to generate gallic acid, ellagic acid and the like, and condensed tannin that is polymerized to generate phlobaphene that is insoluble in water. In particular, condensed tannin reacts with aldehyde to become a polymer.

Tannin is a collection of complex organic compounds present in plants , as described above. However, according to the conventional definition, tannin is "a substance which is easily dissolved in water, whose aqueous solution is highly astringent, and which has the property of tanning leather", and water is most inexpensive as an extraction solvent. Therefore, hydrolysable tannin and condensed tannin are extracted with water, warm water or hot water.

On the other hand, tannin has been industrially used as a tanning agent in most cases. In addition, tannin is used as a precipitant for various kinds of metal ions. Other uses of tannin include its use as tannic acid of the Japanese Pharmacopoeia, an adhesive for wood or its filler. In any case, tannin extracted with warm water or hot water as an extraction agent is used as a base agent, and if required, tannin may be further purified with an organic solvent or modified with alkalis or the like.

As condensed tannin, tannin for industrial purposes is extracted from hemlock bark, mangrove bark, wood and bark of eucalyptus, pine bark, larch bark, spruce bark, or the like. Such condensed tannin is used as a tanning agent. On the other hand, tannin extracted from acacia bark or quebracho wood with warm water or hot water has been used as an adhesive or a binder for wood from the latter half of 1960s by utilizing the property of condensed tannin which reacts with aldehyde to become a polymer.

Furthermore, from the 1950s, the radiata pine (*Pinus radiata*) bark planted in Chile, New Zealand and Australia has also been used as an adhesive for wood, in the same way as tannin from acacia bark and wood from the quebracho tree. As an extraction solvent, similarly, warm water or hot water, or an alkaline aqueous solution of warm water or hot water in the case of the radiata pine (*Pinus radiata*) bark has been used (Australian Patent No. 518703 (1981)). In addition, the effect of the composition of the solvent mixture on the extraction of tannin from pinus radiata bark was assessed. In particular, water, methanol and mixtures thereof in propotions (7:3), (1:1) and (3:7) were evaluated (Chem. Abstracts, Vol.135, abstract No. 58522 and Vol. 136, abstract No. 356606).

However, in particular, tannin extracted with an alkaline aqueous solvent has its yield enhanced, whereas its reactivity with aldehyde is lost. As a result, adhesion and binding force are degraded, and tannin suitable for an adhesive cannot be obtained.

Furthermore, in the case where tannin is extracted from the radiata pine (*Pinus radiata*) bark with warm water or hot water as an extraction solvent as in the conventional extraction, it is necessary to extract tannin for a long period of time so as to enhance the yield of tannin. However, when tannin is extracted with warm water or hot water for a long period of time, although the yield of tannin is increased, the content of tannin (hereinafter referred to as "purity") reacting with aldehyde is decreased, and the viscosity of the tannin solution is increased to such a degree so as to make coating difficult if its use is in the formulation of an adhesive. Thus, the quality of tannin as a main agent of an adhesive is degraded, so that such a tannin cannot be used.

Accordingly, an improvement has been studied by putting emphasis on an extraction operation of extracting tannin within a short period of time without changing the chemical structure thereof, while using warm water or hot water as an extraction solvent (Canadian Patent No. 1285555 (1985); Australian Patent Application No. 61467/90 (1900); Australian Provisional Patent Application No. PO09260 (1997)).

As a result of the improvement, a yield of tannin of 30.5% and a purity of 85.9% were obtained using boiling water as an extraction solvent as in the conventional example. However, the viscosity of a solution with a tannin solid content of 40 to 45%, at which sufficient adhesion strength is obtained, is too high (i.e., 18,000 mPa · s), so that such an improvement has not been put into practical use.

As described above, tannin is an aggregation of complex organic compounds. Therefore, it is considered that the constituent components of tannin to be obtained vary depending upon the extraction solvent, the extraction method, and feed material. Furthermore, it is also considered that these extraction conditions change depending upon the use. Nonetheless, there is a fixed idea that "tannin is soluble in water", and hot water, boiling water or an aqueous solvent with a small amount of additive such as sodium hydrogen sulfite added thereto have been used as an extraction solvent for tannin with respect to any plant resources, since these solvents are inexpensive. Particularly for extraction of tannin as an adhesive or a binder for wood, an extraction solvent other than water, warm water or hot water has not been used.

### SUMMARY OF THE INVENTION

It is an object of the present invention to obtain tannin that can be used as an adhesive for wood and the like from bark of radiata pine (*Pinus radiata*) planted as a fast growing tree species mainly in New Zealand, Australia and Chile and used for lumber and pulpwood.

The invention is characterized in that the bark of radiata pine *(Pinus radiata*) is separated into an inner bark and an outer bark, and tannin suitable as an adhesive for wood and the like is obtained from the outer bark.

These and other advantages of the present invention will become apparent to those skilled in the art upon reading and understanding the following detailed description.

### DESCRIPTION OF THE PREFERRED EMBODIMENTS

Lower alcohols having 1 to 4 carbon atoms are preferable as extraction solvents in the present invention. Examples of the lower alcohols include methanol, ethanol, n-propanol, isopropanol, butanol and the like. Among them, methanol and ethanol are preferable, and methanol is particularly preferable in terms of compatibility with water, a low cost, recovery of an extraction solvent, and the like. Lower alcohols may be used alone or in combination depending on the use of tannin to be obtained.

Lower alcohols as extraction solvents may be used with water. The mixing ratio between the lower alcohol and water is selected in accordance with the characteristics of the tannin to be obtained. The mixing ratio (volume ratio) between lower alcohol and water is generally in a range of 99:1 to 50:50, preferably in a range of 99:1 to 80:20, and 20% or less of water is particularly preferable. It is particularly effective to mix lower alcohol with water in the case of vaporizing alcohol from a tannin extraction solution to concentrate a tannin solution, thereby obtaining a tannin aqueous solution.

The extraction solvent may be used in an amount of 1 to 20 times, preferably about 5 times in weight with respect to the material to be extracted. Considering the concentration of the extraction solution in the later process, the amount of a solvent is desirably minimized.

An extraction temperature is not particularly limited. However, considering vaporization/evaporization of alcohol and the like, the extraction temperature is preferably lower than a boiling point of the alcohol to be used. Generally, extraction is conducted preferably at 15°C to 65°C. In the case where an apparatus is of an airtight system or a closed pressure system, or in the case where extraction is conducted using water, a higher temperature may be used.

An extraction method of tannin is not particularly limited. However, in the case of extraction with alcohol alone, considering the possibility that alcohol is volatilized, extraction may be conducted preferably in an airtight system such as an extraction tank and an extraction autoclave. Extraction by an extraction solvent may be batch-wise or continuous. A contact time is generally selected in a range of 10 minutes to 24 hours at room temperature under a normal atmospheric pressure. The contact time is preferably 10 to 30 minutes. In a pressure extraction system, the contact time can be further shortened.

Extraction is basically conducted in two stages: contacting in an extraction solvent and filtering by pressure or suction. However, depending upon the kind and size (crushed and ground particle size) of the extraction material, an extraction-filtering process may be conducted two or more times. In this case, an extraction solvent to be used may be changed between the first and second contacts. Separation by filtration can be conducted by a method commonly used in solid-liquid separation such as pressure, suction, and centrifugation, as well as filtration under normal atmospheric pressure.

Examples of filtration after extraction include centrifugation, sedimentation, reduced-pressure suction and filtration, and pressure filtration. These filtering means may be used in a combination of pressure and suction.

In addition, extraction-filtration can be conducted in one step using a pressure extruder. Two processes: crushing and extraction can be continuously conducted in a single step with a high-speed crushing apparatus. Unlike an aqueous solvent, a lower alcohol has a lower retention in the material to be treated, so that continuous processing using these techniques can be conducted.

As a plant resource, used for extraction of tannin, radiata pine *(Pinus radiata*) bark can be used. Radiata pine (*Pinus radiata*) is planted as a fast-growing tree species, and used for processing by the wood and pulp industry. The radiata pine (*Pinus radiata*) bark and waste wood are discharged and dumped in large amounts during the processing. As a result, tannin which is a polyphenol component dissolves into the soil to cause environmental problems such as inhibition of the growth of other plants. Therefore, the bark and waste wood of radiata pine (*Pinus radiata*) must be effectively used.

The plants conventionally used for the extraction of tannin have a relatively high tannin content. In order to obtain tannin having properties useful as an adhesive, a binder, or the like, mangrove, acacia, radiata pine (*Pinus radiata*), pine, eucalyptus, oak, hemlock, and the like are desirable. In particular, the bark thereof is preferable in the light of making efficient use of a resource allowing a tannin component to be obtained.

In the extraction of tannin, in the case of a plant resource (e.g., a tree), bark or the like is crushed into an appropriate size or formed into a fiber. Although not particularly limited, a crushing particle size may be 1 mm or less, preferably about 500 to 800 µm, taking into consideration the extraction capability with a solvent, filtering properties of an extraction slurry, and the treatment of the cake (residue) after extraction.

A crushing particle size varies depending upon the kind of plant resource and the shape of the crushed plant resource. A filter with a pore diameter of 20 to 60 µm is suitable for filtration of a tannin solution in the later filtering process. Therefore, in order to prevent clogging, the particle size of a plant resource is desirably 5 times larger than that of the filter pore diameter.

An extraction solution containing tannin after extraction is concentrated to an appropriate concentration by ventilation drying, reduced-pressure drying or the like, and then, freeze-dried, spray dried or the like to obtain tannin powder.

Depending upon the use, a tannin concentrate may be obtained. Furthermore, in the case of using a condensate with formaldehyde, a tannin concentrate may be reacted with formaldehyde to obtain a precondensate.

The cake (residue) after extraction may be cracked or fiberized to obtain a filler or an expander, or may be crushed into an appropriate size to obtain a solid fuel.

The tannin content (Stiasny Value) of the tannin powder obtained by the method of the present invention, which reacts with aldehyde is 80% or more (preferably 90% or more), to 106.8% which is a theoretical value of a reaction product with aldehyde in a case where the tannin is 100% catechin(weight percentage: this applies to rest of the specification).

A tannin solution as an adhesive and a binder desirably has a viscosity of 6,000 mPa • s or less which is suitable for coating in an extruder or a flow coater of a coating apparatus. A tannin solution with a solids content of 35 to 45% produces with an aldehyde a product with an adhesion strength equal to that of phenol resin. An adhesive prepared using tannin obtained according to the present invention has a satisfactory processibility as well as good coating properties. Such an adhesive has a high adhesion strength with respect to a wood test piece, and on fracturing, the break is often seen to occur in the wood not at the glue line. Compatibility with other resins (e.g., formaldehyde type resin) can be obtained in a range of 1:99 to 99:1 (tannin: resin).

The method for extracting tannin using the outer bark of radiata pine (*Pinus radiata*) as an extraction material is conducted as follows. Unlike the conventional method using the entire bark, the bark is separated into outer bark and inner bark, and only the outer bark is used. In this way a large amount of a component rich in tannin and suitable for use as an adhesive or a binder for wood can be obtained.

Separation into outer bark and inner bark is conducted as follows: radiata pine (*Pinus radiata*) bark is processed in a shredder or the like to form block-shaped outer bark particles and fiber-shaped inner bark particles, and the mixture of the outer bark and the inner bark is subjected to pneumatic separation, a screen or the like. The outer bark thus separated is crushed into the desired predetermined size range used as the extraction feed for tannin.

The radiata pine tree (*Pinus radiata)* consists of some 5 to 12% by weight bark when the tree is used for processing into lumber and pulp. Radiata pine (*Pinus radiata*) bark is composed of an outer bark and an inner bark. The inner bark is fibrous, with a thickness that is substantially constant over the height of the base to the top. In contrast, the outer bark is suberose, and its thickness changes significantly from the base to the top. For example, in radiata pine (*Pinus radiata*) with a breast height diameter of 50 cm, the thickness of the outer bark is about 40 mm thick at the base and only about 4 mm thick at the top. The thickness of the milky-white inner bark is substantially constant (1 to 2 mm) from base to top. It was found as a result of the study by the inventors of the present invention that the extract from the inner bark contains large amounts of carbohydrates which increase viscosity and lower the adhesion performance. In contrast, it was also found that the reddish-brown outer bark contains large quantities of tannin which react with formaldehyde and the tannin is suitable for use as an adhesive for wood and the like.

As described above, in radiata pine (*Pinus radiata*) bark, the ratio between an outer bark and an inner bark over the entire tree is not constant. Furthermore, in the past it is industrially difficult to separate radiata pine (*Pinus radiata*) bark into an outer bark and an inner bark. Therefore, conventionally, radiata pine (*Pinus radiata*) bark has been used without being separated into outer bark and inner bark. Because of this, the content of tannin reactive with formaldehyde is small, and only tannin of low quality having non-uniform chemical non-uniform properties has been obtained. Consequently, it has been difficult to use radiata pine (*Pinus radiata*) bark tannin industrially for an adhesive for wood. The inventors of the present invention paid attention to the difference between the suberin of an outer bark and the fiber of an inner bark, and found a method for industrially separating the bark into an outer bark and an inner bark in a simple and efficient manner.

### <Separation of bark>

When radiata pine (*Pinus radiata*) bark in a wet state peeled from a tree or log is fed to a shredder so as to be parallel with the fiber direction of the inner bark and the rotary blade of the shredder, the suberose outer bark is crushed forming block shaped particles while the fibrous inner bark is discharged as fiber balls without being cut to any extract. Furthermore, the inner bark in a wet state immediately after being peeled from the tree is comprised of living cells, so that the inner bark has a high water content and a high specific gravity. In contrast, the outer bark is composed of suberose light tissue and is in an essentially dry state. Thus, the radiata pine (*Pinus radiata*) bark can be easily separated into a fibrous inner bark and a suberose outer bark by being subjected to a pneumatic force, a screen or the like after passing through a rotary shredder. When the water content of the bark material is less than 20% (dry state), the inner bark is also cut by a shredder, which makes it difficult to separate the bark in the later step (selection by blowing). Therefore, a wet fresh bark with a water content of 20% or more is preferable.

Crushing of the bark may be conducted by a crusher capable of crushing bark into an appropriate size, such as a shredder. A suberose outer bark is crushed into a block shaped particles, and the fibrous inner bark defibrated fibers. Therefore, separation of bark may be conducted by a screen with an appropriate mesh as well as by pneumatic means. Alternatively, the bark may be separated through rollers capable of catching only fibers in an entangled state.

### <Crushing of material bark (outer bark)>

The outer bark of the radiata pine (*Pinus radiata*) bark thus separated is crushed into particles of 1 mm or less (in particular about 100 to 600 µm) and fed to an extraction process. Alternatively, the outer bark may be crushed after being dried to an appropriate water content, and fed to an extraction process.

Although not particularly limited, crushing is conducted, preferably, by a method that does not allow the temperature to rise substantially during crushing.

### <Extraction>

As an extraction solvent, warm water or hot water may be used in the same way as in the conventional method. Preferably, lower alcohols such as methanol and ethanol or water-containing alcohol may be used in the same way as in the above-mentioned extraction method from a plant resource. Extraction is conducted in two steps: leaching in an extraction solvent and filtering by pressure, suction or the like. Depending upon the particle size of the material, extraction-filtration may need to be conducted two or more times. Furthermore, in order to enhance an extraction efficiency, counter current extraction may be used.

### <Separation by filtration>

Separation by filtration can be conducted by a method used in general solid-liquid separation such as pressure, suction, and centrifugation, as well as by filtration under normal atmospheric pressure. Examples of filtration include centrifugation, sedimentation, reduced-pressure suction and filtration, and pressure filtration. These filtering means may be combined as in a combination of pressure and suction.

### Examples

Hereinafter, the present invention will be described by way of illustrative examples. It should be noted that the present invention is not limited thereto. In the following examples, unless otherwise specified, "%" and "parts" denote "% by weight" and "parts by weight".

### Reference Example 1

As a plant resource, radiata pine (*Pinus radiata*) bark produced in large amounts in the processing of wood was used. This was crushed into a powder having a size passing through a 600µm mesh screen. The bark powder contains the inner bark and the outer bark. (This also applies to Reference Examples 2 to 6.)

As extraction solvents for the tannin, 23 kinds of solvents with boiling points lower than the boiling point of water 100°C were considered in order to avoid alteration of the tannin. Three kinds of organic solvents (methanol, ethanoland isopropanol) were selected as those which are capable of dissolving tannin. To these was added n-butanol. These extraction solvents in a 5-fold amount by weight were added to the bark, and tannin was extracted at room temperature for 15 minutes. Then, the extraction solutions were filtrated with a filter having a pore diameter of 20 to 60 µm. The pore size of the filter was selected depending upon the shape and particle size during crushing of the plant resource.

The organic solvents were vaporized from the tannin filtrates (extraction solutions) obtained with the above-mentioned four kinds of extraction solvents to obtain tannin concentrates. The tannin concentrates obtained by extraction with the organic solvents and an aqueous solution tannin concentrate obtained by extraction with boiling water were subjected to freeze drying to obtain tannin powder.

Table 1 shows an extract (tannin powder) yield with respect to the total dry weight of the radiata pine (*Pinus radiata*) bark obtained by extraction with the organic solvents and boiling water, purity and a tannin yield with respect to the total dry weight of the bark. As is understood from Table 1, extraction solvents having a high tannin yield with respect to the total dry weight of the bark and a high purity were conventional boiling water and lower alcohols (methanol, ethanol).

Furthermore, Table 1 shows the viscosity (25°C) when aqueous solutions were made from the solid tannin powder prepared as described above so as to obtain 40% solid content of the resultant tannin powder, and test results of adhesion in a dry strength of an adhesive obtained by mixing 0.5 parts of sodium hydroxide, 10 parts of paraformaldehyde, 5 parts of coconut shell powder and 5 parts of flour based on 100 parts of a tannin aqueous solution of 40% solid content.

As is understood from Table 1, in the case of lower alcohols (methanol, ethanol), the tannin yield, purity, coating property, and adhesion in a normal state were high.

**Table 1**

| Extraction solvent (types of alcohol) and physical properties of tannin | | | | | | |
|---|---|---|---|---|---|---|
| Extraction solvent | Extract yield (%) | Stiasny Values (%) | Tannin yield(%) | Viscosity *1(mPa · s) | Coating property *2 | Adhesion in a normal state (kgf/cm²) |
| Methanol | 33.0 | 96.2 | 31.7 | 1000 - 6000 | ⓞ | 20 - 25 |
| Ethanol | 32.0 | 93.6 | 29.9 | 1000 - 6000 | ⓞ | 20 - 25 |
| Isopropanol | 20.2 | 82.3 | 16.6 | 1000 - 6000 | ⓞ | 20 - 25 |
| n-butanol | 20.3 | 81.5 | 16.5 | 1000 - 6000 | ⓞ | 20 - 25 |
| Boiling water | 30.5 | 85.9 | 26.0 | 6000-18000 | × | 15 - 20 |
| Alkaline aqueous solution | 52.9 | 54.4 | 28.8 | 6000 - 12000 | × | 5-10 |

| | | | | | | |
|---|---|---|---|---|---|---|
| *1 Tannin aqueous solution containing 40% solids content | | | | | | |
| *2 Suitable viscosity in a coating apparatus (extruder and flow coater) is 500 to 6000 mPa · s. The coating property symbols, ⓞ, ○, Δ, and × represent "excellent", "satisfactory", "unsatisfactory", and "unacceptable", respectively. "excellent", "satisfactory", "unsatisfactory", and "unacceptable", respectively. | | | | | | |

### Reference Example 2

Radiata pine (*Pinus radiata*) bark crushed and screened using a 600 µ m mesh screen was extracted with a lower alcohol (methanol or ethanol)/aqueous solvent in the same manner as in Reference Example 1. A mixing ratio between the lower alcohol and water was set in the range 100 : 0 to 0:100, and extraction was conducted at room temperature for 15 minutes in each case. This was followed by filtration, concentration, and drying conducted in the same manner as in Reference Example 1 to obtain tannin powder. Table 2 shows the results obtained by measuring the tannin yield and purity. In addition, Table 2 shows the viscosity of an aqueous solution prepared using the tannin powder so obtained giving a solid content of 40%, together with the dry strength of an adhesive prepared using the same mixing ratios as those in Reference Example 1.

As is understood from Table 2, when a mixing ratio between lower alcohol and water is 100:0 to 50:50, the tannin yield and purity with respect to the total dry weight of bark are high. Furthermore, when a mixing ratio between lower alcohol and water is 100:0 to 70:30, the coating property is high. In addition, when a mixing ratio between lower alcohol and water is 100:0 to 80:20, dry strength is high.

**Table 2**

| Results of an extraction solvent (alcohol : water) | | | | | | |
|---|---|---|---|---|---|---|
| Extraction solvent alcohol:water | Extract yield (%) | Stiasny Values (%) | Tannin yield(%) | Viscosity*1 (mPa · s) | Coating property*2 | Adhesion in dry strength (kgf/cm²) |
| 100 : 0 | 33.0 | 96.2 | 31.7 | 1000-6000 | ⓞ | 20 - 25 |
| 90 : 10 | 31.0 | 91.5 | 28.4 | 1000 - 6000 | ⓞ | 20 - 25 |
| 80 : 20 | 30.0 | 90.0 | 27.0 | 1000 - 6000 | ⓞ | 20 - 25 |
| 70 : 30 | 28.3 | 86.5 | 24.5 | 1000 - 6000 | ⓞ | 18 - 23 |
| 60 : 40 | 28.0 | 82.3 | 23.0 | 2000 - 7000 | ○ | 18 - 23 |
| 50 : 50 | 29.0 | 81.5 | 23.6 | 2000 - 7000 | ○ | 18 - 23 |
| 0 : 100 | 30.5 | 85.9 | 26.2 | 6000 -18000 | × | 15 - 20 |

| | | | | | | |
|---|---|---|---|---|---|---|
| *1 Tannin aqueous solution containing 40% solids content | | | | | | |
| *2 Suitable viscosity in a coating apparatus (extruder and flow coater) is 500 to 6000 mPa · s. The coating property symbols, ⓞ, ○, Δ, and × represent "excellent", "satisfactory", "unsatisfactory", and unacceptable", respectively. | | | | | | |

### Reference Example 3

An adhesive was prepared using tannin extracted from radiata pine *(Pinus radiata*) bark with methanol (obtained in Reference Example 1) as a main material, and its adhesion was tested. Table 3 shows examples of the composition of the adhesive. The viscosities after mixing the 40% tannin aqueous solution and the results obtained with an adhesive liquid made using the tannin, namely the coating property and adhesion strength found using an extruder and a flow coater as a coating apparatus were shown in Tables 1 and 2 in Reference Examples 1 and 2.

An adhesion strength test was conducted as follows. Veneers of radiata pine (*Pinus radiate*) and kapur were used as test pieces (specimen). Each veneer was coated with an adhesive in an amount of 150 to 200 g/m², and pressed under a cold pressure of 0.8 MPa for 5 minutes and under a hot pressure of 1.0 Mpa at 140°C for 7 minutes to be bonded to each other. The plywood exhibited performance of Fco at a diffusion amount of formaldehyde of 0.5 mg/L or less based on Japanese Agricultural Standard (JAS). The adhesion test was conducted with respect to 10 test pieces in dry strength (in which the test pieces were as initially produced) and 10 test pieces after boiling in water for 72 hours. Table 4 shows average results.

As is understood from Table 4, adhesion in dry strength and a fracture ratio in the wood were higher in the case of a tannin adhesive using methanol as the extraction solvent than in the case of a conventional tannin adhesive using hot water as the extraction solvent. The adhesion and fracture ratio in the wood after boiling were also higher in the case of an adhesive formed from tannin extracted with methanol than in the case of an adhesive using tannin extracted with hot water. Thus, adhesives of the present example exhibited adhesion equal to or higher than that of a commercially available phenol resin adhesive, and a tannin adhesive extracted with methanol had high water resistance.

**Table 3**

| Mixing examples of a tannin adhesive extracted from radiata pine *(Pinus radiata*) bark with methanol | | | |
|---|---|---|---|
| Mixing example No. | 1 | 2 | 3 |
| Tannin | 100 parts | 100 parts | 100 parts |
| Water | 150 parts | 150 parts | 150 parts |
| Sodium hydroxide | 0.5 - 1 part | 0.5 - 1 part | 0.5 - 1 part |
| Paraformaldehyde | 10 parts | 10 parts | 10 parts |
| Macadamia Nuts shell flour | 5 parts | 10 parts | 0 part |
| Wheat flour | 5 parts | 0 part | 10 parts |
| Tannin solids content in an adhesive liquid | 30 - 40 (%) | 30 - 40 (%) | 30 - 40 (%) |

**Table 4**

| Tannin/formaldehyde adhesive using tannin extracted from radiata pine (*Pinus radiata*) bark with methanol | | | | |
|---|---|---|---|---|
| Test venner | Test condition | Adhesion test (kgf/cm²) (Wood failure (%)) | | |
| | | Tannin adhesive tannin extracted with boiling water | Tannin adhesive tannin extracted with methanol | Phenol resin adhesive |
| Radiata pine (*Pinus radiata*) | Normal state | 17 | 17 | 15 |
| | | (80) | (80) | (90) |
| | Boiling | 8 | 12 | 10 |
| | | (73) | (70) | (60) |
| Kapur | Normal state | 20 | 25 | 23 |
| | | (70) | (80) | (75) |
| | Boiling | 7 | 17 | 15 |
| | | (45) | (60) | (60) |

### Reference Example 4

Tannin was extracted from radiata pine (*Pinus radiata*) bark in one process including crushing and extraction using a high-speed crusher.

First, 250 kg of methanol was added to 50 kg of small lumps of roughly crushed radiata pine (*Pinus radiata*) bark, and the mixture was stirred and crushed in a high-speed crusher at 40°C for 15 minutes to obtain a methanol suspension containing fine bark particles of 0.6 mm or less. Bark fine particles were separated from the suspension thus obtained by a centrifugal separator to obtain a methanol solution (tannin extract) containing tannin. The tannin extract was treated in the same way as in Reference Example 1 to obtain tannin powder.

Since processes from crushing to extraction can be conducted in a short period of time, tannin containing more stable components were obtained. Similar results were obtained using ethanol as the solvent.

### Reference Example 5

Tannin was extracted with boiling methanol (boiling point: 65°C) and methanol at room temperature (15°C to 25°C) by the methanol extraction method in Reference Example 1.

Table 5 shows the yields of the extracts with respect to the total dry weight of the plant materials extracted with boiling methanol and methanol at room temperature respectively, and their stiasny values. From Table 5, it is seen that when boiling methanol is used, the yield of the extract is increased although the stiasny values is decreased.

**Table 5**

| Extraction temperature of methanol | | | |
|---|---|---|---|
| Temperature of extraction solvent | Extract yield (%) | Stiasny Values (%) | Tannin yield (%) |
| Room temperature (15 - 25°C) | 33.9 | 90.0 | 28.6 |
| Boiling methanol (65°C) | 37.7 | 85.9 | 30.3 |

### Reference Example 6

Methanol was evaporated from the tannin/methanol solution obtained by extraction and filtration in Reference Examples 1 to 4 to obtain a tannin concentrate. Methanol was evaporated using a reduced-pressure dryer, a low-temperature heating dryer, and a rotary evaporator. In any evaporator, the solution was satisfactorily concentrated. In order to prepare a tannin solution of 40% solids content for mixing into an adhesive in a later process, a tannin concentrate containing methanol in a range of 1 to 60% may be used. The tannin concentrate was freezed-dried and spray-dried to obtain tannin powder.

Hereinafter, examples using the outer bark of radiata pine (*Pinus radiata*) bark as an extraction material will be described.

### Example 1

Hereinafter, examples using the outer bark of radiata pine (Pinus radiata) bark as an extraction material will be described.

### <Treatment>

Using a debarker in a timber mill, 1000 kg of radiata pine *(Pinus radiata)* bark were collected. When the entire bark is used as the feed to the extractor, the total moisture content of the bark was unimportant. When a separation of the inner bark from the outer bark is required, the moisture content of the bark becomes important. The fibrous inner bark must be maintained moist in order for it to retain its fibrous structure. An overall moisture content of 20% or more is satisfactory.

### <Separation to crushing of bark (outer bark)>

When the radiata pine (*Pinus radiata)* bark in a wet state was placed in a shredder of a rotation disk type (e.g., Rover Mode 19885) operated at 1000 to 10000 revolutions per minute (RPM), the suberose outer bark is crushed by the rotation disk and dropped below the rotation disk; the fibrous inner bark was discharged in the direction of the disk rotation. In the case where separation was insufficient, the process was conducted two or more times in accordance with the required degree of separation.

The separated outer bark of radiata pine (*Pinus radiata*) bark was further crushed to a particle size of 1 mm or less, preferably 100 to 600 µm by a hammer mill or the like.

### <Extraction to Filtration>

The crushed outer bark (800 kg) was placed in an extraction apparatus by a screw feeder after weighing, and an extraction solvent in about 3-fold amount by weight of the bark (2400kg) was introduced into the extraction apparatus. At this time, as the extraction solvent, a lower alcohol (methanol) was used, instead of the conventional warm water or hot water extractant. The extraction was conducted by extracting at room temperature for 15 minutes, with the filtration conducted with a filter having a pore diameter of 5 to 60 µm.

### <Concentration>

The extraction solvent was evaporated from the tannin filtrate (extract) obtained in the above manner to obtain a tannin concentrate. The tannin concentrate extracted with the organic solvent was freezed-dried and spray dried, to obtain tannin powder.

Table 6 shows an extract (tannin powder) yield of the outer bark, the inner bark, and the mixture of the outer bark and the inner bark in a ratio of 1:1 of the radiata pine (*Pinus radiata*) bark extracted with the organic solvent, with respect to the total dry weight of the bark, the tannin purity, and the tannin yield with respect to the total dry weight of the bark.

As is understood from Table 6, in the radiata pine (*Pinus radiata*) bark, the extract yield, tannin purity, and tannin yield of the inner bark are lower than those of the outer bark. When using a lower alcohol such as methanol and ethanol as the extraction solvent, the difference in an extract yield, the tannin purity, and the tannin yield between the outer bark and the inner bark is larger when compared with tannin extracted using boiling water.

### <Preparation of an adhesive>

Table 7 shows the viscosity (25°C) of tannin aqueous solutions prepared so as to contain 40% solids content of tannin powder thus obtained and the coating property of an adhesive obtained by mixing 0.5 parts of sodium hydroxide, 10 parts of paraformaldehyde, 5 parts of coconut shell glue and 5 parts of flour based on 100 parts of a tannin solid content of a 40% tannin aqueous solution. As is understood from Table 7, the viscosity of a 40% solids content tannin solution obtained by extraction of the outer bark with a lower alcohol (methanol or ethanol) was lower with tannin extracted from the mixture of outer bark and inner bark. Furthermore, the coating property of a tannin solution of 40% solids content obtained by extraction with lower alcohol using an extruder, a flow coater or the like was also satisfactory.

### <Adhesion test>

In order to evaluate the adhesion performance of the tannin adhesive obtained in the above, radiata pine (*Pinus radiata*) rotary peeled veneers was used for the preparation of plywood specimen in accordance with JAS. Each veneer was coated with an adhesive in an amount of 150 to 200 g/m², and pressed under a cold pressure of 0.8 MPa for 5 minutes and under a hot pressure of 1.0 MPa at 140°C for 7 minutes to be bonded to each other. The plywood specimens prepared were tested in accordance with the JAS (Plyeood). The plywood produced showed a performance of Fco at a diffusion amount of formaldehyde of 0.5 mg/L or less based on JAS. The adhesion performance test was conducted with respect to 10 test pieces in a normal state (in which the test pieces as initially produced) and 10 test pieces after boiling in water for 72 hours. Table 8 shows average values.

As is understood from Table 8, the test chip attached with the adhesive prepared by the above procedure using tannin obtained by extraction from only the outer bark with methanol or ethanol has high adhesion in dry strength and wood failure under boiling, when compared with the test chips attached by the adhesive prepared from tannin extracted from the mixture of the outer bark and the inner bark.

**Table 6**

| | Extract yield (%) | | |
|---|---|---|---|
| Elution solvent | Outer bark | Inner bark | Mixture *1 |
| Boiling water | 31.5 | 28.3 | 30.0 |
| Methanol | 36.0 | 20.6 | 27.7 |
| Ethanol | 35.0 | 16.4 | 25.1 |

| | Stiasny Values (%) | | |
|---|---|---|---|
| Elution solvent | Outer bark | Inner bark | Mixture *1 |
| Boiling water | 86.4 | 52.2 | 73.7 |
| Methanol | 96.7 | 40.4 | 79.0 |
| Ethanol | 95.0 | 33.4 | 79.3 |

| | Tannin yield (%) | | |
|---|---|---|---|
| Elution solvent | Outer bark | Inner bark | Mixture *1 |
| Boiling water | 27.3 | 18.9 | 25.0 |
| Methanol | 34.8 | 8.3 | 21.9 |
| Ethanol | 33.3 | 5.5 | 19.9 |

| | | | |
|---|---|---|---|
| *1 Outer bark : inner bark = 1 : 1 | | | |

**Table 7**

| | Viscosity of a tannin solution of 40% solids content (mPa • s) | | Coating property *2 | |
|---|---|---|---|---|
| Extraction solvent | Outer bark | Mixture *1 | Outer bark | Mixture *1 |
| Boiling water | 6000 - 18000 | 6000 - 18000 | × | × |
| Methanol | 1000 - 6000 | 6500 - 9000 | ⓞ | Δ |
| Ethanol | 1000 - 6000 | 6500 - 9000 | ⓞ | Δ |

| | | | | |
|---|---|---|---|---|
| *1 Outer bark : inner bark = 1 : 1 | | | | |
| *2 Suitable viscosity in a coating apparatus (extruder and flow coater) is 500 to 6000 mPa • s. The coating property symbols, ⓞ, ○, Δ, and × represent "excellent", "satisfactory", "unsatisfactory", and "unacceptable", respectively. | | | | |

**Table 8**

| Adhesion test of tannin/formaldehyde adhesive extracted from radiata pine (*Pinus radiata*) bark | | | | | |
|---|---|---|---|---|---|
| | | Outer bark | | Mixture *1 | |
| Extraction solvent | Test condition | Adhesion strength (kqf/cm²) | Wood failure (%) | Adhesion strength (kgf/cm²) | Wood failure (%) |
| Boiling water | Normal state | 18 | 80 | 8 | 50 |
| | Boiling | 10 | 73 | 3 | 40 |
| Methanol | Normal state | 20 | 90 | 8 | 50 |
| | Boiling | 15 | 75 | 4 | 40 |
| Ethanol | Normal state | 20 | 90 | 8 | 50 |
| | Boiling | 15 | 75 | 4 | 40 |

| | | | | | |
|---|---|---|---|---|---|
| *1 Outer bark : inner bark = 1 : 1 | | | | | |

When tannin is extracted as the main material, particularly, for use as an adhesive or a binder, using lower alcohol or a lower alcohol/aqueous solvent, irrespective of the kind of a plant, a tannin yield with respect to the total dry weight of a material approaches the tannin content of a plant resource, the amount of tannin reacting with aldehyde becomes high, and a distribution with a lower molecular weight becomes stable. Furthermore, the solvent can be evaporated at a temperature lower than 100°C, unlike conventional boiling water or an aqueous solvent of an alkaline aqueous solution. Therefore, tannin can be produced with low use of energy.

When the extraction solvent in the present invention is used, unlike the case of water (such as boiling water) alone, extraction can be conducted at lower temperatures and higher rates. Therefore, tannin with low viscosity and uniform quality can be obtained since the extraction component is not polymerized, degraded, or altered due to temperature, oxygen, or the like. Lower alcohols extraction solvents (in particular, methanol and ethanol) have a low boiling point, so that they can be easily evaporated and collected for reuse.

In the case of extracting tannin from radiata pine (*Pinus radiata*) as the extraction source material, the bark that contains most of the tannin is separated into outer bark and inner bark, and only the outer bark is selectively used. The viscosity of a 40% solids content aqueous tannin solution as low as 6000 mPa•s can be obtained. The tannin thus obtained allows an adhesive to be formed so as to have a suitable viscosity with satisfactory coating properties. Therefore, such tannin can be uniformly applied to plywood or the like without causing dryout or marks using a coating apparatus such as an extruder or a flow coater. Furthermore, tannin extracted from the outer bark has a high purity, and most of such tannin reacts with formaldehyde. Therefore, a tannin adhesive can be obtained, which has water resistance and adhesion strength equal to or higher than those of a synthetic phenol resin adhesive in terms of adhesion, a binding force, and the like. This adhesive can be used as a binder for producing synthetic wood such as a chipboard by being mixed with a wood piece or a wood chip.

Various other modifications will be apparent to and can be readily made by those skilled in the art without departing from the scope and spirit of this invention. Accordingly, it is not intended that the scope of the claims appended hereto be limited to the description as set forth herein, but rather that the claims be broadly construed.

## Claims

1. A method for producing tannin, comprising the steps of:
separating radiata pine *(Pinus radiata*) bark into an outer bark and an inner bark; and extracting only the outer bark as a source material.

2. A method for producing tannin according to claim 1, comprising the steps of: subjecting a block-shaped outer bark and a fiber-shaped inner bark, obtained by treating the radiata pine (*Pinus radiata*) bark with a shredder, to a pneumatic force, a screen, thereby separating the outer bark from the inner bark; grinding the separated outer bark; and extracting tannin from the obtained ground substance as a material, with lower alcohol or a mixed solvent of lower alcohol/water.

3. A method for producing tannin according to claim 1, wherein the water content of the radiata pine (*Pinus radiata*) bark before or during separation with a pneumatic force or a screen is 20% or more.

4. Tannin, obtained by the method according to any one of claims 1 to 3.

5. An adhesive or a binder for wood comprising tannin obtained by the method according to claims 1 to 3.

## Patentansprüche

1. Verfahren zur Herstellung von Tannin, umfassend die Schritte: Trennen der Rinde der Monterey-Kiefer (Pinus radiata) in eine äussere und eine innere Rinde; und Extrahieren nur der äusseren Rinde als Ausgangsmaterial.

2. Verfahren zur Herstellung von Tannin gemäss Anspruch 1, umfassend die Schritte: Behandeln einer blockförmigen äusseren Rinde und einer faserförmigen inneren Rinde, erhalten durch Behandlung der Rinde der Monterey-Kiefer (Pinus radiata) mit einem Schredder, mit einer pneumatischen Kraft, einem Metallsieb, wodurch die äussere Rinde von der inneren Rinde getrennt wird; Mahlen der getrennten äusseren Rinde; und Extrahieren von Tannin aus der erhaltenen gemahlenen Substanz als Material, mit einem niedrigen Alkohol oder einem gemischten Lösungsmittel aus niedrigem Alkohol/Wasser.

3. Verfahren zur Herstellung von Tannin gemäss Anspruch 1, wobei der Wassergehalt der Rinde der Monterey-Kiefer (Pinus radiata) vor oder während der Trennung mit der pneumatischen Kraft oder einem Metallsieb 20 % oder mehr beträgt.

4. Tannin, erhalten durch das Verfahren gemäss einem der Ansprüche 1 bis 3.

5. Kleber oder Bindemittel für Holz, umfassend Tannin, erhalten durch das Verfahren gemäss Ansprüchen 1 bis 3.

## Revendications

1. Méthode pour la production de tannin, comprenant les étapes de : la séparation de l'écorce de pin de Monterey *(Pinus radiata*) en une écorce externe et une écorce interne ; et l'extraction de l'écorce externe seule en tant que matière première.

2. Méthode pour la production de tannin selon la revendication 1, comprenant les étapes de : la soumission d'une écorce externe en forme de bloc et d'une écorce interne en forme de fibres, obtenues par traitement de l'écorce du pin de Monterey *(Pinus radiata*) avec un déchiqueteur, à une force pneumatique, un tamis, avec ainsi séparation de l'écorce externe de l'écorce interne ; le broyage de l'écorce externe séparée ; et l'extraction du tannin de la substance broyée obtenue en tant que matière, avec un alcool inférieur ou un solvant mixte alcool inférieur/eau.

3. Méthode pour la production de tannin selon la revendication 1, où le taux d'eau de l'écorce du pin de Monterey *(Pinus radiata*) avant ou pendant la séparation par une force pneumatique ou un tamis est de 20 % ou plus.

4. Tannin obtenu par la méthode selon l'une quelconque des revendications 1 à 3.

5. Adhésif ou liant pour bois comprenant du tannin obtenu par la méthode selon les revendications 1 à 3.
